# EUROPEAN PATENT APPLICATION

(11) **EP 4 186 998 A1**
(43) Date of publication of application: **31.05.2023**
(21) Application number: 21210589.4
(22) Date of filing: 25.11.2021
(51) Int. Cl.: C25B 3/26, C25B 9/23, C25B 15/08, C25B 1/02

(54) **SYSTEM AND METHOD FOR INTEGRATED CO2 CAPTURE AND HYDROGEN PRODUCTION**

(71) Applicant: VITO NV, 2400 Mol (BE)
(72) Inventor: Bouwman, Bert, 2400 Mol (BE); Bulut, Metin, 2400 Mol (BE); Birdja, Yuvraj Y., 2400 Mol (BE); Vaes, Jan, 2400 Mol (BE)
(74) Representative: Arnold & Siedsma

(57) **Abstract**

The present invention is related to a system and method for the removal of carbon dioxide from an atmosphere, more particularly by removing carbon dioxide from an atmosphere using water electrolysis, which produces hydrogen.

The system and method are based on improvements related to the electrolyser which is fed by a CO₂-rich, post-capture (bi)carbonate solution, wherein said improvements enable isolation of a 85:15 wt.% CO₂/O₂ gas mixture from the anolyte during operation, with an in line CO₂/O₂ separation at the anode of the electrolyser.

## Description

### FIELD OF THE INVENTION

The present invention is related to a system and method for the removal of carbon dioxide from an atmosphere, more particularly by removing carbon dioxide from an atmosphere using alkaline solutions and water electrolysis, which produces hydrogen.

The system and method are based on improvements related to the electrolyser which is fed by a CO₂-rich, post-capture (bi)carbonate solution, wherein said improvements enable isolation of a 85:15 wt.% (or 66:34 vol.%) CO₂/O₂ gas mixture from the anolyte during operation, with an in line CO₂/O₂ separation at the anode of the electrolyser.

### BACKGROUND TO THE INVENTION

Carbon dioxide continues to build up in the environment. According to the National Oceanic and Atmospheric Administration (NOAA), the growth of carbon dioxide in the earth's atmosphere was 3 parts per million (ppm) per year in 2015 and 2016, and 2 ppm in 2017. Techniques to remove carbon dioxide from the air have become a critical area of research.

CO₂-emissions from industry and electricity production consists of large and localized streams (100 kt to 1 Mt per year) and smaller point sources with cumulative emissions in the Mt range. It is recognized that CO₂ capture at these point sources is the border stone of emission reduction, and that even in case existing value chains proceed without change, yearly emission reduction by capture remains important. Novel more environmentally friendly production technologies can of course, reduce CO₂ capture need, if they could be implemented faster or cheaper.

As mentioned above, it is an object of the present invention to provide a CO₂ capture method and system using water electrolysis which produces O₂ and hydrogen. The market demand for hydrogen has grown significantly over the recent years with growth rates from 3.5 to 6 %. The chemical industry represents the largest demand, with the refining industry as an important end-user (25 % of total demand). Smaller end users are steel producers apply H₂ for direct reduction of iron ore (3 %). This industry plays an important role, as CO₂ emitter and depends on carbon-based feedstocks for production of (in)organic chemicals. This industry is energy-intensive and accordingly could also acts as enabler in the energy sector and its renewable transition, with the development of large-scale (Carbon Capture Use (CCU) / Carbon Capture Storage (CCS) Hubs through their industrial clusters and connections.

Current technologies of CCU and CCS are typically based on scrubbing with amine solutions. An alternative is potassium carbonate capture that combines low capture costs with little toxicity, ease of regeneration, low corrosiveness, high stability and favorable absorption capacity. As a result, the process has been applied in more than 700 plants. The process is based on (bi)carbonate cycles, where dissolved K₂CO₃ captures CO₂, resulting in KHCO₃, which is pre-crystallized and dissociated as solid into CO₂ and carbonate above 100 °C. However, absorption kinetics are rather slow, which can be remediated by using engineered (thermostable) carbonic anhydrase enzymes, and doesn't produce Hydrogen often used by the energy-intensive industries mentioned herein before.

There is accordingly a need for a cost-competitive CCU system that combines the supply of low cost CO₂ and green H₂ at a point sources of CO₂ emission. It is an object of the present invention to provide such CCU/CCS system relying on an electrolyser which produces O₂ and H₂ from water, and that comprises an integrated CO₂ capture and release configuration. This system of integrated CO₂ capture and Hydrogen production will hereinafter also be referred to as ICO₂CH system.

### SUMMARY OF THE INVENTION

The present invention provides a method of removing carbon dioxide (CO₂) from an atmosphere and generating hydrogen, comprising;
- Capturing carbon dioxide from the atmosphere in an aqueous alkaline capture solution;
- Obtaining a post-capture (bi)carbonate solution, hereinafter also referred to as (bi)carbonate solution;
- Feeding the (bi)carbonate solution to the anode cell of a water electrolyser;
- OER in the (bi)carbonate solution at the anode with formation of CO₂ and O₂;
- HER at the cathode with formation of H₂ and regeneration of the aqueous alkaline capture solution; characterized in that the anode cell of the electrolyser comprises an integrated CO₂ / O₂ separator.

As is generally known, the overall reaction of water electrolysis can be divided into two half-cell reactions: hydrogen evolution reaction (HER) and oxygen evolution reaction (OER). HER is the reaction where water is reduced at the cathode to produce H₂, and OER is the reaction where water is oxidized at the anode to produce O₂. Using an alkaline capturing solution, the electrolyser used is an alkaline water electrolyser, wherein the alkaline capturing solution, regenerated at the cathode typically comprises hydroxide solutions of alkali metals (e.g., sodium and potassium) and alkaline earth metals (e.g., calcium) with a pH of at least 7. In a particular embodiment the aqueous alkaline capture solution is selected from a KOH or a NaOH solution.

Key to the method according to the invention is the presence of the integrated CO₂/O₂ separator in the anode cell of the electrolyser. This integrated configuration allows the ICO₂CH system for example to be part of oxy-fuel combustion in a reciprocating engine with CO₂ dilution. In this combustion mode, some or all of the incoming air is replaced with a mixture of oxygen and CO₂ recirculated from the exhaust of the engine. The quantity of CO₂ that can be fed back to the engine intake is dependent on the concentration of oxygen in the fuel/oxidizer mixture. The stream of CO₂/O₂ produced at the anode of the ICO₂CH system, can be directly valorised by a natural gas (NG) fuelled Internal Combustion (IC) engine to realise ultra-low carbon emitting, partial oxy-fuel combustion, i.e. displacement of a portion of the engine air with a stream of CO₂/O₂ oxidizer. With an engine appropriately sized to a given electrolyser rating, a substantial portion of CO₂ remains captive in the system, as the CO₂ in engine exhaust is combined with KOH and recirculated to the electrolyser, where CO₂ is eventually produced from the anode and cycled back to engine as diluent for the partial oxy-fuel combustion process. It is accordingly an object of the present invention to the use of the ICO₂CH system as part oxy-fuel combustion in a reciprocating engine with CO₂ dilution.

In another aspect the present invention provides a system, herein also referred to as the ICO₂CH system, for removing carbon dioxide (CO₂) from an atmosphere and generating hydrogen, comprising;
- An aqueous alkaline solution -based CO₂ capturing system;
- An alkaline water electrolyser, wherein;
   ∘ the anode cell has an inlet for and is configured for OER in the alkaline capture solution at the anode with formation of CO₂ and O₂;
   ∘ the cathode is configured for HER with formation of H₂ and regeneration of the aqueous alkaline capture solution; and
- characterized in that the anode cell of the electrolyser comprises an integrated CO₂/O₂ separator.

In one embodiment the integration of the CO₂/O₂ separator into the anode cell of the electrolyser is based on performing the OER of the alkaline capture solution at pressures up to 60 bar and at reduced temperatures up to and above cryogenic temperature. Under said circumstances the produced Oxygen will be in the gas phase whilst the produced Carbon Dioxide remains in solution. Such set-up accordingly allows an instant and in-line separation of the Oxygen produced at the anode without the need of an additional CO₂ / O₂ separator. As such it simplifies the installation, and enables for example, the system according to the invention to be part of oxy-fuel combustion in a reciprocating engine with CO₂ dilution.

In the system according to the invention, and relying on an aqueous alkaline solution-based CO₂ capturing system, the OER at the anode is expected to yield CO₂/O₂ mixtures comprising a mole fraction of at least 70% CO₂; in particular from about 70:30 CO₂:O₂ to about 85:15 CO₂:O₂; more in particular from about 80:20 CO₂:O₂ to about 85:15 CO₂:O₂. For such CO₂/O₂ mixtures the anode should be kept at pressures up to 70 bar and at reduced temperatures up to and above cryogenic temperature; in particular at temperatures from about 0°C to about -40°C and respective pressure from about 50 bar to about 10 bar.

### BRIEF DESCRIPTION OF THE DRAWINGS

Figure 1 - Schematic cell set-up of an alkaline water electrolyser involving 1) OER and acidification of (bi)carbonate solution to form CO₂ and O₂ at the anode, 2) Cation (M⁺) transport through the membrane and 3) HER and MOH regeneration, at the cathode.

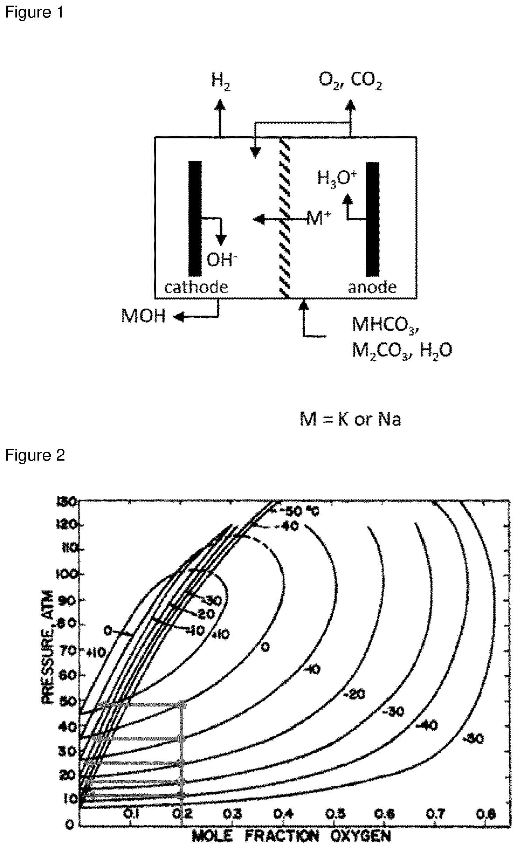

Figure 2 - Isotherms for CO₂-O₂ mixtures. Arrows indicate for a CO₂:O₂ mixture with a O₂ mole fraction of 0.2 the minimal pressures at which CO₂ is still in the liquid phase at the indicated temperatures of the crossing isotherms. For example for the isotherm of 0°C the pressure equals 48 atm; for the isotherm of -10°C the pressure equals 35 atm; for the isotherm of -20°C the pressure equals 25 atm; for the isotherm of -30°C the pressure equals 18 atm; for the isotherm of -40°C the pressure equals 12 atm. Depending on the temperature at which the anode is kept, a different minimal pressure well be required to keep the CO₂ the liquid phase. In an embodiment according to the invention the temperature will be kept at freezer temperatures ranging from about -15°C to about -20°C, whilst keeping a minimal pressure of 30 atm.
Figure 3 - The proportion of combustion CO₂ emissions that are recirculated back to a stoichiometric, natural gas reciprocating engine from the electrolyser anode as a function of the volume of intake air replaced with a 34% O₂/66% CO₂ mixture

### DETAILED DESCRIPTION OF THE INVENTION

The present invention is directed to an improved system and method for capturing CO₂ from an atmosphere and converting it in an output gas for valorisation such as green H₂ use, Carbon Capture Use (CCU), Carbon Capture Storage (CCS) and partial oxy-fuel combustion. The system and method herein disclosed are based on an electrolyser as core technology in combination with CO₂ capturing technology relying an alkaline capturing solution. Compared to existing systems and methods the present invention differs at least in the configuration of the reaction environment at the anode of the electrolyser. The oxidation reaction is performed at a reduced temperature up to and above cryogenic temperature and increased pressures up to 60 bar.

A schematic representation of the cell setup of an electrolyser is provided in figure 1. It shows M⁺ transport across an ion-permeable membrane held between the two electrodes. As membranes for electrolysis, asbestos, nonwoven fabric, ion exchange membranes, polymer porous membranes, composite membranes of inorganic substances and organic polymers, and the like have been proposed. For example, JP2008-144262 includes an organic fiber cloth incorporated in a mixture of a hydrophilic inorganic material of calcium phosphate compound or calcium fluoride and an organic binder selected from polysulfone, polypropylene, and polyvinylidene fluoride. An ion permeable diaphragm is shown. Further, for example, in JP62-196390, a granular inorganic hydrophilic material selected from antimony, zirconium oxide and hydroxide, and a fluorocarbon polymer, polysulfone, polypropylene, polyvinyl chloride, and polyvinyl butyral are selected. An ion permeable membrane comprising stretched organic fiber fabrics is shown in a film-forming mixture consisting of a modified organic binder. The electrolyser used in the context of the invention is in particular a water electrolyser, more in particular an alkaline water electrolyser.

As part of the system any currently known CO₂ Capturing technologies using an aqueous alkaline solution to absorb the CO₂ can be used. Various scrubbing processes have been proposed to remove CO₂ from the air, or from flue gases, but for use in the ICO₂CH system according to the invention, the scrubbing process is preferably based on a potassium or sodium hydroxide solution. The CO₂ is absorbed in the solution to produce the corresponding (bi)carbonate. The CO₂ is subsequently released by applying a nominal voltage across the (bi)carbonate solution in the electrolyser. In general, the alkaline capturing solution is selected from hydroxide solutions of alkali metals (e.g., sodium and potassium) and alkaline earth metals (e.g., calcium) with a pH of at least 7.

It is a first objective of the present invention to provide a method of removing carbon dioxide (CO₂) from an atmosphere and generating hydrogen, comprising;
- Capturing carbon dioxide from the atmosphere in an aqueous alkaline capture solution;
- Feeding the thus obtained aqueous (bi)carbonate solution to the anode cell of a water electrolyser;
- Performing the oxygen evolution reaction (OER) in the aqueous (bi)carbonate solution at the anode with formation of CO₂ and O₂;
- Performing the hydrogen evolution reaction (HER) at the cathode with formation of H₂ and regeneration of the aqueous alkaline capture solution;
characterized in that the anode cell of the electrolyser comprises an integrated CO₂ / O₂ separator.

It is a second objective of the invention to provide a system, herein also referred to as the ICO₂CH system, for removing carbon dioxide (CO₂) from an atmosphere and generating hydrogen, comprising ;
An aqueous alkaline solution -based CO₂ capturing system;
A water electrolyser, wherein;
   the anode cell has an inlet for and is configured for OER in an aqueous (bi)carbonate solution coming from the aqueous alkaline solution -based CO₂ capturing system at the anode with formation of CO₂ and O₂;
   the cathode is configured for HER with formation of H₂ and has an outlet for a regenerated aqueous alkaline capture solution to the aqueous alkaline
   solution -based CO₂ capturing system ; and
characterized in that the anode cell of the electrolyser comprises an integrated CO₂ / O₂ separator.

As mentioned hereinbefore, the method and system rely on the combination of an aqueous alkaline solution -based CO₂ capturing system; and a water electrolyser, wherein the latter is characterised in that the anode cell of the electrolyser comprises an integrated CO₂ / O₂ separator.

Said integration simplifies the present setup in that no further CO₂ / O₂ separator downstream of the electrolyser is needed. In one embodiment the integrated CO₂ / O₂ separator implies that the anode cell is configured to perform the OER of the (bi)carbonate solution at pressures up to 70 bar and at reduced temperatures up to and above cryogenic temperature. In another embodiment the anode cell is configured to perform the OER of the (bi)carbonate solution at pressures from about and between 10 bar to up to 50 bar and at reduced temperatures from about and between 0°C to -40 °C.

In an even further embodiment not only the anode cell is configured to perform the OER at pressures up to 70 bar, but also the cathode cell of the electrolyser is configured to be operated at said pressures. By maintaining a common pressure at both the anode and the cathode cell of the electrolyser, a pressure difference across the ion-permeable membrane held between the two electrodes can be prevented, simplifying the design of the electrolyser.

In an embodiment according to the invention the methods or systems as herein provided are further characterized in that the cathode is configured to perform the HER with formation of H₂ and regeneration of the aqueous alkaline capture solution at pressures up to 70 bar; in particular at pressures from about and between 10 bar to up to 50 bar.

In another embodiment according to the invention the methods or systems as herein provided are further characterized in that the HER at the cathode and the OER at the anode are performed at the same pressure, in particular at the same pressure from about and between 10 bar to up to 70 bar; more in particular at the same pressure from about and between 10 bar to up to 50 bar.

The methods and systems of the present invention produce high purity CO₂ and O₂ streams which make it suitable in oxy-fuel combustion. Thus in a further aspect the present invention provides the use of the ICO₂CH system as defined in any of the foregoing embodiments as part oxy-fuel combustion in a reciprocating engine with CO₂ dilution.

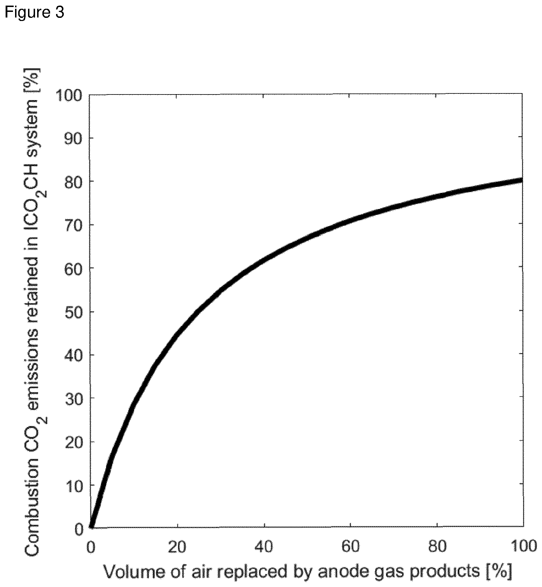

As an example of the potential CO₂ reduction, when using the ICO₂CH system as part of an oxy-fuel combustion, consider a single 500 kW natural gas-fired reciprocating engine that is used to produce electricity and operates for the equivalent of 300 days in a year. This engine operates at stoichiometry such that all the oxygen is used to oxidize the fuel. Also, take the anode product stream from the electrolyser to have a nominal composition of 34 % O₂ and 66 % CO₂ by volume. As the incoming air to the engine is replaced by the recirculated anode gas mixture, a portion of the combustion CO₂ emissions are retained in the ICO₂CH system, therefore decreasing the carbon-intensity of the combustion process. Figure 3 illustrates this concept for a range of volumetric air replacement by the electrolyser anode products.

As shown, replacing only 25 % of the incoming air to the engine with the O₂-CO₂ mixture results in a system retention of 50 % of the exhaust CO₂ emissions per unit of fuel combusted. At this level of air replacement (and assuming the engine is able to operate robustly in a partial oxy-fuel combustion mode), a 500 kW, state-of-the-art natural gas generator set running for 300 days per year at a fuel conversion efficiency of 30 % (including both the efficiency of the engine and generator) would avoid nearly 1100 metric tons of CO₂. This figure discounts the possibility for increasing engine efficiency by operating with excess oxidizer relative to the fuel (lean-burn) or other advanced combustion strategies, and therefore this reduction is considered conservative. In short, the integrated electrolyser and reciprocating engine system within ICO₂CH has a significant potential to abate carbon emissions related to heat and power generation.

## Claims

1. A method of removing carbon dioxide (CO₂) from an atmosphere and generating hydrogen, comprising;
- Capturing carbon dioxide from the atmosphere in an aqueous alkaline capture solution;
- Feeding the thus obtained aqueous (bi)carbonate solution to the anode cell of a water electrolyser;
- OER in the aqueous (bi)carbonate solution at the anode with formation of CO₂ and O₂;
- HER at the cathode with formation of H₂ and regeneration of the aqueous alkaline capture solution; **characterised in that** the anode cell of the electrolyser comprises an integrated CO₂ / O₂ separator.

2. The method according to claim 1 wherein the water electrolyser is an alkaline water electrolyser.

3. The method according to claims 1 or 2 wherein the alkaline capturing solution, is selected from hydroxide solutions of alkali metals (e.g., sodium and potassium) and alkaline earth metals (e.g., calcium) with a pH of at least 7.

4. The method according to any one of the previous claims wherein the aqueous alkaline capture solution is selected from a KOH or a NaOH solution.

5. A system, herein also referred to as the ICO₂CH system, for removing carbon dioxide (CO₂) from an atmosphere and generating hydrogen, comprising ;
- An aqueous alkaline solution -based CO₂ capturing system;
- An water electrolyser, wherein;
o the anode cell has an inlet for and is configured for OER of an aqueous (bi)carbonate solution coming from the aqueous alkaline solution -based CO₂ capturing system at the anode with formation of CO₂ and O₂;
o the cathode is configured for HER with formation of H₂ and has an outlet for a regenerated aqueous alkaline capture solution to the aqueous alkaline solution -based CO₂ capturing system ; and
**characterised in that** the anode cell of the electrolyser comprises an integrated CO₂ / O₂ separator.

6. The method or system according to any one of the previous claims, wherein the anode cell comprising the integrated CO₂ / O₂ separator is configured to perform the OER of the (bi)carbonate solution at pressures up to 70 bar and at reduced temperatures up to and above cryogenic temperature.

7. The method or system according to any one of the previous claims, wherein anode cell comprising the integrated CO₂ / O₂ separator is configured to perform the OER of the (bi)carbonate solution at pressures from about and between 10 bar to up to 50 bar and at reduced temperatures from about and between 0°C to -40 °C.

8. The method or system according to any one of the previous claims, wherein the cathode cell is configured to perform the HER with formation of H₂ and regeneration of the aqueous alkaline capture solution at pressures up to 70 bar.

9. The method or system according to any one of the previous claims, wherein the cathode cell is configured to perform the HER with formation of H₂ and regeneration of the aqueous alkaline capture solution at pressures from about an between 10 bar to up to 50 bar.

10. The method or system according to any one of claims 6 to 9 wherein the HER at the cathode and the OER at the anode are performed at the same pressure; in particular at the same pressure from about and between 10 bar to up to 50 bar.

11. Use of the ICO₂CH system as defined in claims 5 or 6 as part oxy-fuel combustion in a reciprocating engine with CO₂ dilution.
